(19) Europäisches Patentamt
European Patent Office
Office européen des brevets

(11) EP 3 305 517 B1

# (12) EUROPEAN PATENT SPECIFICATION

(45) Date of publication and mention of the grant of the patent:
**19.08.2020 Bulletin 2020/34**

(21) Application number: **16799889.7**

(22) Date of filing: **18.05.2016**

(51) Int Cl.:
*B32B 5/18* (2006.01) *B29C 55/12* (2006.01)
*B32B 27/00* (2006.01) *B32B 27/34* (2006.01)
*C08L 81/02* (2006.01) *H01B 17/56* (2006.01)
*B29L 9/00* (2006.01) *B32B 7/02* (2019.01)
*B32B 27/08* (2006.01) *B32B 27/20* (2006.01)
*B32B 27/28* (2006.01) *B32B 3/26* (2006.01)

(86) International application number:
**PCT/JP2016/064705**

(87) International publication number:
**WO 2016/190183 (01.12.2016 Gazette 2016/48)**

## (54) MULTILAYER FILM AND METHOD FOR PRODUCING SAME

MEHRLAGIGER SCHUTZFILM UND VERFAHREN ZUR HERSTELLUNG DAVON

FILM MULTICOUCHE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.05.2015 JP 2015107211**

(43) Date of publication of application:
**11.04.2018 Bulletin 2018/15**

(73) Proprietor: **Toray Industries, Inc.**
**Tokyo 103-8666 (JP)**

(72) Inventors:
- **WAKAHARA, Yoko**
  **Otsu-shi**
  **Shiga 520-8558 (JP)**
- **TAKAHASHI, Kenta**
  **Otsu-shi**
  **Shiga 520-8558 (JP)**
- **TANAKA, Takashi**
  **Otsu-shi**
  **Shiga 520-8558 (JP)**
- **SUEOKA, Masanori**
  **Otsu-shi**
  **Shiga 520-8558 (JP)**

(74) Representative: **Mewburn Ellis LLP**
**Aurora Building**
**Counterslip**
**Bristol BS1 6BX (GB)**

(56) References cited:
**JP-A- 2007 301 784** **JP-A- 2007 301 784**
**JP-A- 2009 274 411** **JP-A- 2011 148 199**
**JP-A- 2011 148 199** **JP-A- 2011 213 109**
**JP-A- 2012 081 741** **JP-A- 2012 081 741**
**JP-A- 2014 189 718** **US-A1- 2015 023 054**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 305 517 B1

## Description

### TECHNICAL FIELD

The present invention relates to a laminated film excellent in heat resistance and electrical insulation.

### BACKGROUND ART

Films and nonwoven fabrics composed of thermoplastic resins represented by polyarylene sulfide resins, polyetherimide resins, polyethylene naphthalate resins, polyamide resins, polyether ether ketone resins, liquid crystal polymer resins, fluorine resins and the like, have been suitably used as insulating materials and heat insulating materials for electric and electronic components, battery members, mechanical parts and automotive parts, due to their excellent heat resistance, electrical insulation and low hygroscopicity, as well as an excellent dimensional stability under high temperature conditions and chemical resistance. In recent years, laminated films composed of combinations of the above described thermoplastic resin films, and laminates composed of combinations of the thermoplastic resin films and the nonwoven fabrics have been developed, for the purpose of imparting thereto heat resistance and functionalities required for the use thereof.

To produce a laminated film or a laminate, there has been used a method in which an adhesive made of resin is applied between films, or between a film(s) and a nonwoven fabric(s), to be laminated, so that they can be laminated with each other (see, for example, Patent Document 1), or a method in which films, or a film(s) and a nonwoven fabric(s), which had been surface treated are laminated with each other by heat lamination (Patent Document 2). However, the thus produced laminated film or laminate is associated with problems that, when used as a member, delamination may occur at a film/ film interface(s) or at a film/ nonwoven fabric interface(s), the heat resistance thereof may be reduced due to heat applied during the lamination process, and the like.

Further, in a laminate of a film(s) and a nonwoven fabric(s), the nonwoven fabric is usually laminated as a surface layer (Patent Document 3). However, the use of such a laminate as a member may cause, for example, contamination in the production process due to fuzzing of fibers of the nonwoven fabric or falling of the fibers therefrom, or a reduction in the insulation performance due to susceptibility to damage. In order to solve the above mentioned problems, a method has been disclosed in which a protective layer is provided by coating on a surface layer of a thermoplastic resin film (Patent Document 4). However, this method is associated with a problem, such as, for example, that the productivity is significantly reduced, since the protective layer having a high heat resistance is formed off-line after the formation of the film. In addition, the use of a nonwoven fabric, film or sheet composed of a polyarylene sulfide, which is represented by polyphenylene sulfide (hereinafter, sometimes abbreviated as PPS), as a filter or a separator, or as an insulator, a heat insulating material or a substrate for a circuit board has been examined, utilizing the properties as described above (see, for example, Patent Documents 5 to 8). Techniques of porosifying a film made of a polyarylene sulfide have been examined, in order to improve the above mentioned properties thereof. For example, there have been proposed: a method in which a substance having a low melting point is mixed to a polyarylene sulfide resin so as to achieve the porosification of the resulting film (see, for example, Patent Document 9); a method in which a molten resin is extruded using a T-die to obtain a sheet, and the resulting sheet immediately after the extrusion is slightly stretched by drafting, to porosify the sheet (see, for example, Patent Document 10); and the like. However, these methods are associated with problems, such as the occurrence of mouthpiece fouling due to containing the substance having a low melting point, poor productivity due to low retention stability, an insufficient formation of pores, and the like.

JP 2012-081741 A concerns a biaxially oriented polyarylene sulfide composite film for mold release practically composed of only a polyarylene sulfide resin and particles, and includes a base material layer and a particle containing layer.

### PRIOR ART DOCUMENTS

### PATENT DOCUMENTS

Patent Document 1: JP 2006-262687 A
Patent Document 2: JP 2012-182910 A
Patent Document 3: JP 2012-232570 A
Patent Document 4: JP 2013-149565 A
Patent Document 5: JP 2010-106408 A
Patent Document 6: JP 10-259561 A

Patent Document 7: JP 2012-251022 A
Patent Document 8: JP 2011-162771 A
Patent Document 9: JP 2015-13913 A
Patent Document 10: JP 58-67733 A

## DISCLOSURE OF THE INVENTION

## PROBLEMS TO BE SOLVED BY THE INVENTION

An object of the present invention is to solve the above mentioned problems, and to provide a laminated film excellent in heat resistance, electrical insulation and/or heat insulation, and film-forming stability.

## MEANS FOR SOLVING THE PROBLEMS

The above mentioned problems have been solved by the laminated film as defined in the appended claims.

## EFFECT OF THE INVENTION

The laminated film according to the present invention can be suitably used as a film for electric and electronic devices, battery members, mechanical parts and automotive parts, as well as insulating materials, heat insulating materials, substrates for circuit boards, and stirring bars for printing toner, due to having an excellent heat resistance, electrical insulation and/or heat insulation.

## MODE FOR CARRYING OUT THE INVENTION

The laminated film according to the present invention is composed of a thermoplastic resin containing, as an element constituting a molecule, at least one of a nitrogen atom or a sulfur atom. The above described thermoplastic resin is preferably at least one selected from the group consisting of, for example, polyamide resins, polyetherimide (PEI) resins, thermoplastic polyamideimide resins, aromatic-containing vinyl resins (such as ABS resins), and polyarylene sulfide resins (such as polysulfone, polyethersulfone, and polyphenylene sulfide resins). Among these, the thermoplastic resin is preferably at least one selected from either a polyarylene sulfide resin or a polyamide resin, in terms of heat resistance and insulation performance. The thermoplastic resin is most preferably a polyarylene sulfide resin in terms of workability and productivity.

The polyarylene sulfide resin to be used in the laminated film according to the present invention refers to a copolymer containing a repeating unit represented by -(Ar-S)-. Examples of Ar include units represented by the following Formulae (A) to (K), and the like.

[Chem. 1]

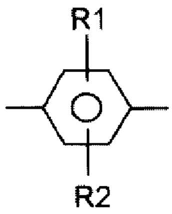
...(A)

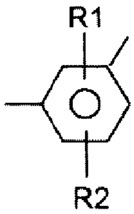
...(B)

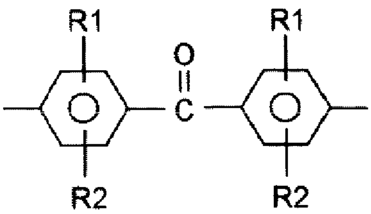
...(C)

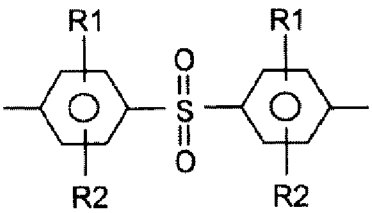
...(D)

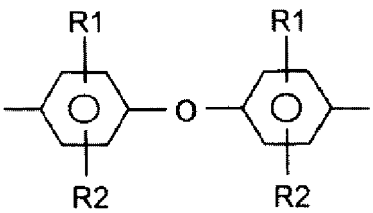
...(E)

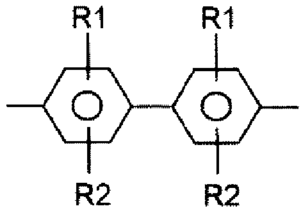
...(F)

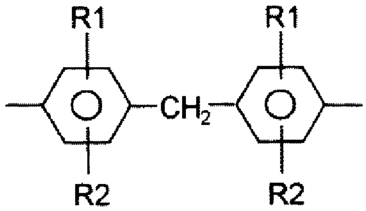
...(G)

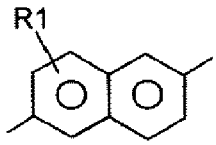
...(H)

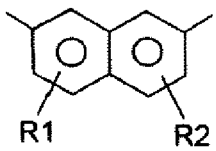
...(I)

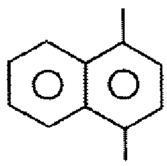
...(J)

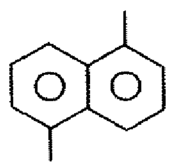
...(K)

(wherein each of R1(s) and R2(s) is a substituent selected from a hydrogen atom, an alkyl group, an alkoxy group, and a halogen group, and R1 and R2 may be the same as or different from each other)

The repeating unit is preferably a p-arylene sulfide unit represented by the above described Chem. 1. Typical examples thereof include polyphenylene sulfide, polysulfone, polyether sulfone, polyphenylene sulfide sulfone, and polyphenylene sulfide ketone. A particularly preferred p-arylene sulfide unit may be, for example, a p-phenylene sulfide unit, in terms of physical properties of the resulting film and economic efficiency.

The polyarylene sulfide resin to be used in the present invention preferably contains, as a main structural unit, a p-phenylene sulfide unit represented by the following structural formula in an amount of 80% by mole or more and 99.9% by mole or less with respect to the total amount of repeating units. The above described composition allows the resulting polyarylene sulfide resin to have an excellent heat resistance and chemical resistance.

[Chem. 2]

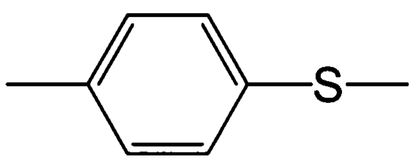

Further, 0.01% by mole or more and 20% by mole or less of the repeating units may be copolymerized with copolymerization units.

Examples of preferred copolymerization units include:

[Chem. 3]

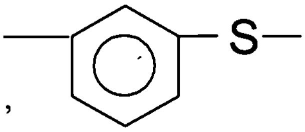

,

[Chem. 4]

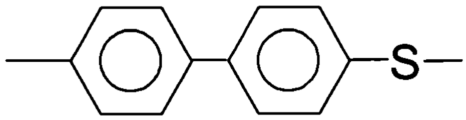

,

[Chem. 5]

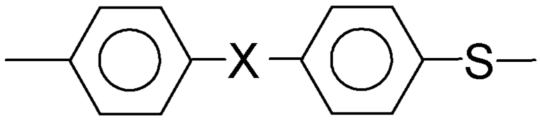

(wherein X represents an alkylene unit, a CO unit, or a $SO_2$ unit),

[Chem. 6]

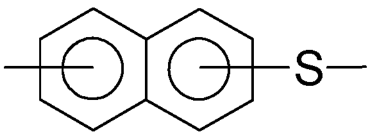

and

[Chem. 7]

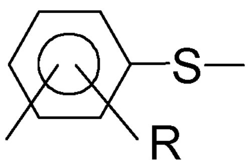

(wherein R represents an alkyl group, a nitro group, a phenylene group, or an alkoxy group). A particularly preferred copolymerization unit is m-phenylene sulfide unit.

The form of polymerization of the repeating unit with a copolymerization component is not particularly limited. However, the resulting polymer is preferably a random copolymer.

The laminated film according to the present invention includes a layer (III) containing inorganic particles and voids, and the voids have an average diameter of 5 μm or more, wherein the inorganic particles contain particles having a particle diameter of 1 μm or less in an amount of less than 25 % by volume. The laminate film may contain another layer (II) having a composition and/or a composition ratio different from that/those of the layer (III). A layer (III) may be at least one of the outermost layer (I) of the laminated film. To form voids in the layer (I) or (III) included in the laminated film according to the present invention, a dry method (a method in which a resin is melted and extruded in the form of a sheet, followed by stretching, to porosify the resulting layer) can be used, since it allows for simplifying the formation process and is excellent in productivity. Further, in view of the retention stability and productivity, a technique is suitably used, when carrying out the dry method, in which the porosification of the layer is achieved by adding inorganic particles to the resin, followed by stretching, so that voids can be formed around the particles.

In the laminated film according to the present invention, it is possible to efficiently form voids in the layer (I) or layer (III) by incorporating inorganic particles.

In the laminated film according to the present invention, the concentration of the particles contained in the layer (I) containing inorganic particles, is preferably from 5% by mass or more, more preferably from 5 to 40% by mass, and still more preferably from 10 to 30% by mass, with respect to 100% by mass of the total composition of raw materials, including the polyarylene sulfide resin and other additives, of the layer (I). When the particle concentration is adjusted within the above described range, it is possible to efficiently form voids, and to reduce falling of the particles from the outermost layer(s) of the laminated film. If the particle concentration is less than 5% by mass, voids may be less likely to be formed during the production of the film to be described later, due to too low a particle concentration. If the particle concentration exceeds 40% by mass, on the other hand, there are cases where the particles contained in the surface layer rise up to the surface of the layer to be exposed thereon, thereby causing falling of the particles (powder falling) during the production of the laminated film to be described later. The other layer (II) included in the laminated film according to the present invention may or may not contain inorganic particles. In cases where the layer (II) of the laminated film according to the present invention contains particles, the concentration of the particles is preferably from 0.01 to 10% by mass, and more preferably from 0.01 to 5% by mass. When the particle concentration is adjusted within the above range, the layer (II) is able to function as a support, during the stretching of the film. If the concentration of the particles contained in the layer (II) exceeds 10% by mass, the resulting film may be susceptible to rupture due to being unable to withstand the stress applied thereto during the stretching, possibly resulting in a compromised film-forming stability. The layer (III) included in the laminated film according to the present invention is a layer containing particles and voids, and is provided as a surface layer and/or an inner layer of the laminated film. The concentration of the particles contained in the layer (III) of the laminated film according to the present invention is preferably from 30 to 70% by mass, with respect to 100% by mass of the total composition of raw materials, including the polyarylene sulfide resin and other additives, of the layer (III). When the particle concentration is adjusted within the above described range, it is possible to secure the productivity of the film as well as to efficiently porosify the film. The particle concentration is preferably from 30 to 60% by mass, and more preferably from 40 to 55% by mass. If the particle concentration is less than 30%, the voids formed around the particles during the stretching are reduced, resulting in a decreased void content. If the particle concentration is greater than 70%, on the other hand, the apparent viscosity of the resin may be increased during the melt extrusion in the film formation, possibly resulting in a failure to stably extrude the resin, or in an increased occurrence of film rupture during the stretching, and thus, in a decreased productivity.

The laminated film according to the present invention is characterized in that at least one of the outermost layers contains voids. The term "voids" refers to pores contained in the film. Inclusion of such voids allows a micro-layered structure to be formed in the surface layer portion. With this arrangement, it is possible to control the shape (roughness) of the surface, and to reduce damage on the surface layer(s), thereby serving to improve the workability, such as, for example, when inserting the film into a slot of a motor. By producing the laminated film using a method to be described later, it is possible to incorporate voids in at least one of the outermost layers.

In cases where the laminated film according to the present invention is composed of two or more layers, including the layer (I) and the layer (II), it is preferred that the ratios of the voids contained in the layer (I) and the layer (II) included in the film satisfy the following Inequality (1):

$$\text{void ratio of layer (I)} > \text{void ratio of layer (II)} \qquad (1).$$

When the void ratios satisfy the above described Inequality (1), the insulation performance of the laminated film can be improved, and at the same time, the layer (II) can serve as a support during the stretching. The presence or absence of the voids and the void ratio, in each of the layers, can be confirmed by the observation and image processing of the cross section of the film, as will be described later.

Examples of the particles which can be used as the particles to be contained in layers (I) to (III) of the laminated film according to the present invention include: oxide ceramics such as alumina, silica, titania, zirconia, magnesia, ceria, yttria, zinc oxide, and iron oxide; nitride ceramics such as silicon nitride, titanium nitride, and boron nitride; ceramics such as silicon carbide, calcium carbonate, aluminum sulfate, barium sulfate, potassium titanate, talc, kaolin clay, kaolinite, halloysite, pyrophyllite, montmorillonite, sericite, mica, amesite, bentonite, asbestos, zeolite, calcium silicate, magnesium silicate, diatomaceous earth, and silica sand; and inorganic compounds such as glass fibers. One type of particles may be used, or a plurality of types may be used as a mixture. Among the above, calcium carbonate, barium sulfate, and titania are preferred in terms of dispersibility; and calcium carbonate is most preferred in terms of low cost.

The inorganic particles to be used in the layer (I) or the layer (III) of the laminated film according to the present invention can be subjected to a surface treatment, to the extent that the physical properties of the laminated film are not impaired.

The particles to be used in the layer (I) or the layer (III) of the laminated film according to the present invention preferably have a volume average particle diameter of from 2 to 20 μm, more preferably from 3 to 20 μm, still more preferably from 5 to 18 μm, and particularly preferably from 5 to 13 μm. The use of the particles having a volume average particle diameter within the above mentioned range enables to efficiently form voids in the layer (I) or (III), since the aggregation between the particles, which is more likely to occur when the particles are incorporated at a high concentration, can be prevented, to allow the stress to be applied convergently around the particles during the stretching. If the particles have a volume average particle diameter of less than 2 μm, voids may be less likely to be formed during the stretching, the size of the voids may be reduced to result in a lower void content, or the particles may be more susceptible to aggregation due to an increase in their surface area, thus possibly resulting in a decreased film-forming stability. If the particles have a volume average particle diameter exceeding 20 μm, on the other hand, the film may be more prone to rupture during the stretching, due to particles penetrating through the film surface, thus possibly resulting in a reduced productivity. In cases where the other layer (II) of the laminated film according to the present invention contains inorganic particles, the inorganic particles preferably have a volume average particle diameter of from 0.01 to 20 μm, and more preferably from 0.1 to 18 μm, in terms of the film-forming stability.

The content of particles having a particle diameter of 1 μm or less, in the particles to be used in the layer (I) or the layer (III) of the laminated film according to the present invention, is less than 25% by volume, more preferably less than 20% by volume, and particularly preferably less than 15% by volume. In general, the surfaces of inorganic particles are covered by hydrophilic groups, and thus, when the inorganic particles are dispersed in a thermoplastic resin, the particles usually aggregate with each other so as to reduce the area of contact interface with the thermoplastic resin having hydrophobic groups. However, the use of the above described particles enables to reduce the surface area of the particles when they are dispersed in a thermoplastic resin, thereby preventing the aggregation. This serves to prevent an increase in the filter pressure or the mixing-in of large masses due to particle aggregation, during the production of the laminated film, thus allowing for a stable production. If the content of the particles having a particle diameter of 1 μm or less is greater than 25% by volume, there are cases where the particles having unstable surface conditions aggregate with each other, and cause clogging in the filter to result in an increased pressure during the production of the laminated film, or the aggregated particles may be formed into large masses, thereby reducing the film-forming stability or quality.

The content of particles having a particle diameter greater than 50 μm, in the particles to be used in the layer (I) or the layer (III) of the laminated film according to the present invention, is preferably 3% by volume or less, and more preferably 1% by volume or less. The incorporation of particles having a particle diameter of 50 μm or more may cause an increase in the pressure during the melt extrusion, or may cause the rupture of the film during the stretching, possibly resulting in a decreased productivity.

The volume average particle diameter, the particle size distribution and the concentration of the particles contained in the layers (I) to (III) containing inorganic particles can be confirmed by: scraping the layer (I) containing inorganic particles, which is disposed as a surface layer, from the film, using a knife or a microplane; subjecting the resultant obtained by scraping to incineration at 500°C to remove the thermoplastic resin; and then measuring the particle size distribution of the resulting charcoal, to be taken as the particle size distribution of the inorganic particles contained in the laminated film. The particles having the above described particle size distribution can be obtained by crushing synthesized or naturally mined particles, and then classifying the crushed particles using a sieve, until they achieve a desired distribution.

The particles to be used in the laminated film according to the present invention can be subjected to a surface treatment to the extent that the physical properties of the laminated film are not impaired. In cases where the laminated film is composed of the layers (I) and (II), the laminated film according to the present invention preferably has a thickness of from 10 to 200 μm, and more preferably from 25 to 150 μm, in terms of productivity. In cases where the laminated film is composed of the layers (III) and (II), the laminated film preferably has a thickness of from 10 to 500 μm, more preferably from 15 to 400 μm, and still more preferably from 15 to 350 μm. The film thickness and the layer thicknesses can be controlled by adjusting the amounts of raw materials to be fed, when producing an unstretched sheet. Further, the film thickness and the layer thicknesses can be evaluated by a method to be described later.

In the laminated film according to the present invention, it is preferred that the mean value of the strength retention ratios in the longitudinal direction and in the width direction, as measured after being treated at 200°C for 1,000 hours, be preferably 70% or more, and more preferably from 80 to 100%, regardless of the layer configuration. When the strength retention ratio is adjusted within the above described range, it is possible to maintain the mechanical properties and the electrical properties of the laminated film, when used under high temperature conditions for a prolonged period of time. If the strength retention ratio is less than 70%, the resulting film has a poor long-term heat resistance, and there are cases where cracks occur or the electrical properties are decreased due to deterioration, when used under high temperature conditions for a prolonged period of time. The strength retention ratio can be adjusted within the above range, by producing the laminated film using the above described thermoplastic resin and a stretching method to be described later. The strength retention ratio can be evaluated by a method to be described later.

In cases where the laminated film according to the present invention is composed of two or more layers, including

the layer (I) and the layer (II), it is preferred that the rate of change $\Delta\mu k$ of the friction coefficient $\mu k$, during a film running test, be less than 10.0. The friction coefficient $\mu k$ is obtained by running the film on a tape running tester, and performing a calculation using the thus measured value, according to the following Equation (2):

$$\mu k = 2/\pi \ln (T2/T1) \quad (2)$$

wherein T1 is the inlet side tension, and T2 is the outlet side tension. The rate of change $\Delta\mu k$ of the friction coefficient $\mu k$ is calculated from the measured values of the friction coefficient $\mu k$ at the first film run and at the $50^{th}$ film run, according to the following Equation (3):

$$\Delta\mu k = \mu k\ (50^{th}\ \text{run}) / \mu k\ (\text{first run}).$$

If the $\Delta\mu k$ is 10.0 or more, the particles may fall off from the film during the film run, to cause scratches, or generation of white powder (occurrence of powder falling) on the film surface due to the surface being scraped. This may cause malfunction due to process contamination or the presence of foreign substances, when using the resulting laminated film. The $\Delta\mu k$ is preferably less than 5.0, and more preferably less than 2.0.

It is possible to incorporate an additive(s) to a resin composition to be used for forming the laminated film according to the present invention, to the extent that the effect of the present invention is not impaired. Specific examples of such additives include organic compounds, thermal decomposition inhibitors, thermal stabilizers, photostabilizer and antioxidants.

It is also possible to incorporate a resin(s) other than the polyarylene sulfide resin to the resin composition to be used for forming the laminated film according to the present invention, to the extent that the effect of the present invention is not impaired. Specific examples of such resins include: polyolefin resins such as polyethylene and polypropylene; polyester resins such as polyethylene terephthalate and polyethylene naphthalate; polyamide resins; polyamideimide resins, polyketones, polyether ketones, polyetherimides, and epoxy resins, but not limited thereto.

The laminated film according to the present invention can be configured such that at least one of the layers constituting the laminated film contains particles, and that the layer (III) containing voids, and the layer (II), are included in the film. By having the above describe configuration, the heat insulation and the film-forming stability of the film can be markedly improved.

The average diameter of the voids contained in the layer (I) or (III) in the laminated film according to the present invention is 5 $\mu$m or more, more preferably from 5 to 40 $\mu$m, and still more preferably from 8 to 30 $\mu$m. When the average diameter of the voids is adjusted within the above range, the resulting film has an increased void content, and as a result, an excellent workability can be obtained in the configuration including the layer (I), whereas excellent heat insulation can be obtained in the configuration including the layer (III). If the average diameter of the voids is smaller than 5 $\mu$m, the void content may be reduced to result in a decrease in the workability or the heat insulation. If the average diameter of the voids exceeds 40 $\mu$m, on the other hand, the resulting film may be susceptible to rupture during the stretching step, possibly compromising the film-forming stability. The average diameter of the voids can be adjusted within the above range, by using the particles having the above described particle diameter. The average diameter of the voids can be confirmed by a method to be described later.

The layer (III) of the laminated film according to the present invention preferably includes at least one layer containing through pores. The term "through pores" as used in the present invention refers to pores which extend from one surface to the other surface of the layer, and thus impart air permeability to the layer. By containing the through pores, the void content in the layer is increased, and excellent heat insulation can be obtained. The formation of through pores in the layer (III) can be achieved by adjusting the concentration of the particles contained in the layer (III). The penetrability of the pores (presence or absence of through pores) formed in the film can confirmed by a method to be described later.

In the present invention, in cases where the laminated film is composed of the layers (I) and (II), and when the layer (I) is referred to as A and the layer (II) is referred to as B, the laminated film has: a two-layer configuration of A/B; or alternatively, a configuration of two or more layers, such as A/B/A, A/B/A/B, A/B/A/B/A or the like, in which at least one of the surface layers is the layer (I). Further, in cases where the laminated film is composed of the layers (III) and (II), and when the layer (III) is referred to as C and the layer (II) is referred to as B, the laminated film may have: a two-layer configuration of C/B; or alternatively, any of multi-layer structures such as C/B/C, B/C/B, C/B/C/B, C/B/C/B/C, and the like. However, a layer configuration of two or more layers is preferred, in terms of the film-forming stability. In addition, the laminated film may have a layer configuration further including a layer having a composition different from those of the layers (I) to (III).

The laminated film according to the present invention preferably has a dielectric breakdown voltage of 110 kv/mm or more, more preferably 120 kV/mm or more, and still more preferably 130 kV/mm or more. There is no particular upper limit for the dielectric breakdown voltage, since a higher dielectric breakdown voltage is more preferred. However, the upper limit thereof is 250 kV/mm or less, in terms of feasibility. The dielectric breakdown voltage refers to the limit voltage value, which is a value at which the dielectric breakdown occurs when the applied voltage is increased, and it can be measured in accordance with JIS C2151 (2006). If the dielectric breakdown voltage is less than 110 kV/mm, the resulting laminate may not be able to exhibit sufficient insulation performance when used as an insulating material, possibly failing to be practically unusable. The dielectric breakdown voltage of the laminated film can be adjusted within the above range by allowing the film to have any of the above described layer configurations and layer structures.

In cases where the laminated film according to the present invention is composed of the layers (III) and (II), the laminated film preferably has a thermal conductivity of 0.25 J/(s·m·K) or less, and more preferably 0.20 J/(s·m·K) or less. If the thermal conductivity exceeds the above range, the resulting film may have insufficient heat insulation. There is no particular lower limit for the thermal conductivity, since a lower thermal conductivity is more preferred. However, the lower limit thereof is preferably 0.01 J/(s·m·K) or more. The thermal conductivity can be controlled within the above range by adjusting the void content in the layer (III) within a range to be described later. The thermal conductivity can be measured by a method to be described later.

In cases where the laminated film according to the present invention is composed of the layers (III) and (II), the void content in the layer (III) is preferably from 30 to 80%, more preferably from 30 to 70%, and still more preferably from 40 to 70%. When the void content is adjusted within the above range, it is possible to reduce the thermal conductivity while maintaining the film-forming stability. If the void content is less than 30%, there are cases where the thermal conductivity is increased, since the voids, which serve to impart a heat-insulating effect to the film, are reduced. If the void content exceeds 80%, on the other hand, the ratio of the resin is reduced, possibly compromising the toughness of the resulting film, and resulting in a reduced stretchability and film-forming stability. The void content can be controlled by incorporating the above mentioned particles in the above mentioned ratio. The void content can be evaluated by a method to be described later.

The method of producing the laminated film according to the present invention will now be described, with reference to the case in which the polyarylene sulfide resin is used as the thermoplastic resin, which is a preferred embodiment of the present invention.

A description will be given below regarding the method of producing the polyarylene sulfide resin to be preferably used in the laminated film according to the present invention. Sodium sulfide is mixed with p-dichlorobenzene, and the mixture is allowed to react in an amide polar solvent such as N-methyl-2-pyrrolidone (NMP) under high temperature and high pressure conditions. It is possible to incorporate a copolymerization component such as m-dichlorobenzene or trihalobenzene, as required. Caustic potash or an alkali metal salt of a carboxylic acid as a polymerization degree regulator is added to the resultant, followed by a polymerization reaction at a temperature of from 230 to 290°C. After the polymerization, the resulting polymer is cooled, and the polymer in the form of a water slurry is filtered by a filter, to obtain a wet polymer in the form of particles. To the thus obtained polymer in the form of particles, an amide polar solvent is added, and the resultant is stirred at a temperature of from 30 to 100°C to wash the particles. The resultant is then washed with ion exchanged water at 30 to 80°C for several times, and then washed with an aqueous solution of a metal salt, such as calcium acetate, for several times, followed by drying, to obtain a polymer of polyarylene sulfide resin in the form of particles. The thus obtained polymer in the form of particles and inorganic particles are mixed at an arbitrary ratio, and the resulting mixture is fed to an extruder equipped with a bent and controlled to a temperature of from 300 to 350°C. The mixture is then melt-extruded in the form of strands, cooled in water at 25°C, and then cut to be formed into chips, to be used as a raw material for the layer (I) containing inorganic particles. At this time, the concentration of the inorganic particles to be added is preferably from 1 to 65 parts by mass, and more preferably from 5 to 65 parts by mass, with respect to 100 parts by mass of the polymer in the form of particles.

Further, the above described polymer in the form of particles alone, or a mixture obtained by mixing the particle-like polymer, the inorganic particles, an additive(s) and the like at an arbitrary ratio, is fed to an extruder equipped with a bent and controlled to a temperature of from 300 to 350°C. The mixture is then melt-extruded in the form of strands, cooled in water at 25°C, and then cut to be formed into chips, to be used as a raw material for the layer (II) having a different composition from that of the layer A. In cases where the inorganic particles are added to the polymer, at this time, the concentrations of the particles in the layers (I) and (II) are adjusted to satisfy the inequality: particle concentration in the layer (I) > particle concentration in the layer (II).

The thus obtained two types of chips are dried under reduced pressure at 180°C for 3 hours, and then respectively fed to two full-flight single-screw extruders, in each of which the melting zone is controlled to a temperature of from 300 to 350°C. The two types of chips, each in a molten state, are allowed to pass through a filter, and then led to a laminating apparatus disposed at the upper portion of the mouthpiece, such that they can be laminated in three layers (in a layer configuration of(I)/(II)/(I), at a lamination ratio of (I): (II): (I) = 1:8:1). Subsequently, the resultant was discharged from the T-die mouthpiece, and allowed to adhere onto a cooling drum controlled to a surface temperature of from 20 to 70°C

in close contact, while applying a static charge thereto, so as to be quickly cooled and solidified, to obtain an unstretched film which is substantially in an unoriented state.

In cases where biaxial stretching is carried out thereafter, the unstretched film obtained as described above is biaxially stretched by a successive biaxial stretching machine or a simultaneous biaxial stretching machine at a temperature within the range of equal to or higher than the glass transition point (Tg) of the polyarylene sulfide resin and equal to or lower than the cold crystallization temperature (Tcc) thereof. Then the resultant is subjected to a single-stage or multi-stage heat treatment at a temperature within the range of from 150 to 280°C, to obtain a biaxially oriented film. Stretching of the unstretched film can be carried out by: a successive biaxial stretching method (a stretching method in which stretching in one direction at a time is combined with another, such as for example, a method in which a film is stretched in the longitudinal direction, and then stretched in the width direction); a simultaneous biaxial stretching method (a method in which a film is stretched in the longitudinal direction and in the width direction, simultaneously); or a method in which these methods are combined. In the present invention, a successive biaxial stretching method in which a film is first stretched in the longitudinal direction, and then in the width direction, is described as an example. The unstretched film is heated by heating rolls, and then stretched in the longitudinal direction (MD direction) to a stretch ratio of from 2.8 to 5.0 times, more preferably from 3.0 to 4.5 times, and still more preferably from 3.0 to 4.2 times, in a single-stage, or a multi-stage of more than two stages (MD stretching). The stretching temperature is preferably within the range of from Tg to Tcc, and preferably from (Tg + 5) to (Tcc-10)°C. The resulting film is then cooled with chill rolls controlled to a temperature of from 20 to 50°C.

The stretching of the film in the width direction (TD direction), to be carried out after the MD stretching, is generally performed using a tenter. The film obtained above is led to a tenter, with both ends thereof held by clips, to be subjected to stretching in the width direction (TD stretching). The stretching temperature is preferably within the range of from Tg to Tcc, and more preferably from (Tg + 5) to (Tcc-10)°C. The stretch ratio is preferably from 2.8 to 5.0 times, and more preferably from 3.0 to 4.5 times, in terms of film flatness.

Next, an operation of subjecting the thus stretched film to heat setting under tension (heat setting treatment) is carried out. The temperature for carrying out the heat setting treatment varies depending on whether the heat setting is carried out by single-stage heat setting in which the heat treatment is carried out at the same temperature throughout the entire heat treatment zone in the tenter, or by multi-stage heat setting in which the heat treatment is carried out at different temperatures in the first half and the second half of the heat treatment zone. In cases where the heat treatment is carried out by single-stage heat setting, the heat setting temperature is preferably from 160 to 280°C. In cases where the heat treatment is carried out by multi-stage heat setting, the heat setting temperature in the first stage (first half) is preferably from 150°C to 220°C, and more preferably from 150°C to 210°C. When the heat setting temperature in the first stage is adjusted within the above range, it is possible to reduce the area magnification, while maintaining the film flatness. The heat setting temperature in the second stage (second half) is preferably from 220 to 280°C, and more preferably from 230 to 275°C. If the heat setting temperature in the second stage is less than 220°C, the thermal dimensional stability of the film may be deteriorated. If the heat setting temperature in the second stage exceeds 280°C, on the other hand, the film may melt and adhere to the clips holding both ends of the film during the film formation, since the heat setting temperature gets close to, or higher than, the melting temperature of the polyarylene sulfide resin constituting the film, possibly resulting in a failure to retrieve the film from the stretching machine. After the completion of the heat setting, the film is cooled to room temperature, while subjecting the film to a relaxation treatment in the longitudinal and in the width direction, if necessary, and then wound, to obtain a biaxially stretched laminated film.

The laminated film according to the present invention can be suitably used as a film for various types of parts, such as automobile parts, and electric and electronic components, particularly, insulating papers and heat insulating materials for various types of motors, substrates for circuit boards, and stirring bars for printing toner, due to having an excellent heat resistance, electrical insulation and/or heat insulation.

[Method of Measuring Properties]

(1) Thicknesses of Laminated Film and Respective Layers constituting Laminated Film, and Layer Configuration

An ion etching treatment was performed on a laminated film fixed on a sample table of a scanning electron microscope, to cut a cross section of the film, using a sputtering apparatus under the conditions of a pressure reduction degree of $10^{-3}$ Torr, a voltage of 0.25 KV and a current of 12.5 mA for 10 minutes. Subsequently, gold was sputtered onto the surface, using the same apparatus, followed by observation using the scanning electron microscope, at a magnification of 3,000-fold.

Then the thickness of the laminated film and the thicknesses of the layers constituting the laminated film were measured, based on an image obtained by the observation. In the film sample used for the measurement of the thicknesses, measurement was carried out at 10 arbitrarily selected locations, and the average of the measured values of the 10 locations were taken as the film thickness of the sample, and the thicknesses of the layers constituting the film.

(2) Presence or Absence of Voids Contained in Respective Layers, Average Diameter of Voids in Layer (I) or Layer (III), and Void Ratios of Respective Layers a. Presence or Absence of Voids

The cross section sample prepared in the above (1) was observed by a scanning electron microscope at a magnification of 5,000-fold. The presence or absence of voids was confirmed based on the image obtained by the observation, and evaluated according to the following criteria.

A: Voids are present.
B: Voids are absent.

b. Average Diameter of Voids in Layer (I) or Layer (III)

In the observation image of the cross section obtained in the above section "a", a void was selected at random, using an image processing apparatus. Then the diameter thereof in the longitudinal direction of the film: (α (μm)), and the diameter thereof in the thickness direction of the film: (β (μm)) were measured, and the void diameter of the selected void was calculated from the thus measured values, according to the following equation:

$$\text{void diameter } (\mu m) = (\alpha + \beta)/2.$$

The void diameter was measured for randomly selected 200 voids, and the average value obtained from the measured values of the voids was taken as the average diameter of voids (μm) of the sample.

c. Void Ratios of Respective Layers

The observation image obtained in the above section "a" was analyzed by an image processing apparatus, to obtain the area of the void portions and the area of the cross section of the film. Then the void ratios of the respective layers were calculated according to the following equation:

$$\text{void ratio} = (\text{area } [mm^2] \text{ of voids included in layer (I) or layer (II) in the observation image}) / (\text{area } [mm^2] \text{ of layer (I) or layer (II) in the observation image}).$$

(3) Content, Volume Average Particle Diameter and Particle Size Distribution (Content of Particles Having a Diameter of 1 μm or Less) of Inorganic Particles a. Content of Inorganic Particles

After confirming the thicknesses of the laminated film and the respective layers, using the method of the above (1), a microplane is used to scrape off the surface layer of the laminated film, within the range not exceeding the thickness of the surface layer. The thus scraped sample is placed in a crucible which had been weighed in advance, and then the crucible was weighed again to obtain the weight of the sample before heating. Next, the crucible containing the sample is heated in a muffle furnace (manufactured by Yamato Science Co., Ltd.) at 500°C for 6 hours, to incinerate the sample. The crucible is then cooled and weighed, and the weight of the sample after heating is measured. Then the content of the inorganic particles contained in the film was calculated from the weights of the sample before and after heating, according to the following equation. The amount of the sample was adjusted such that the mass of the resulting residue would be within the range of from 100 to 200 mg.

$$\text{Content of inorganic particles (\% by mass)} = \text{weight after heating (mg)} / \text{weight before heating (mg)} \times 100$$

b. Volume Average Particle Diameter and Particle Size Distribution

The residue obtained in the above section "a" was mixed with purified water, and the resultant was adjusted to a transmittance of around 90%. After subjecting the resulting dispersion liquid to an ultrasonic wave treatment for 4

minutes, the measurement was carried out using a laser diffraction scattering particle size distribution measuring apparatus (MicroTrac MT 3000, manufactured by Nikkiso Co., Ltd.) at a laser beam wavelength of 780 nm and a measurement temperature of 25°C, in accordance with JIS Z8825-1: 2001, to obtain the particle size distribution of the sample. The volume average particle diameter was then calculated from the I thus obtained particle size distribution, according to the following equation:

$$\text{volume average particle diameter } (\mu m) = \Sigma(vd)/\ \Sigma v$$

wherein d is a representative value for each particle size channel, and v is a content (% by volume) in percentage of the particles in each particle size channel. Further, based on the above described results of the particle size distribution

measurement, the content (% by volume) of particles having a particle diameter of 1 μm or less was calculated.

(4) Electrical Insulation (Dielectric Breakdown Voltage)

The measurement of the dielectric breakdown voltage was carried out using an AC dielectric breakdown tester (AC 30kV; manufactured by Kasuga Electric Works Ltd.), in accordance with JIS C 2151. Using a test specimen prepared in the shape of a square having a size of 25 cm × 25 cm and subjected to humidity control under an environment of 23°C and 65% RH, the measurement was carried out at a frequency of 60 Hz and a pressure rise rate of 1,000 V/sec. The thus obtained absolute value was divided by the thickness of the sample, and the resulting value was taken as the dielectric breakdown voltage. Electrodes used for the measurement are: a lower electrode, which serves as a pedestal, in the shape of a column having a diameter of 75 mm and a height of 15 mm; and an upper electrode in the shape of a column having a diameter of 25 mm and a height of 25 mm. As each of the electrodes, one whose surface to be in contact with the test specimen had been chamfered to R = 3 mm was used. Measurement was carried out 10 times for each sample, and the mean value of the measured values was taken as the dielectric breakdown voltage (kV/mm) of the sample.

(5) Heat Resistance

A test specimen was cut out from the laminated film in a width of 10 mm and a length 250 mm, in each of the MD direction and the TD direction. The test specimen was subjected to a heat treatment in a hot air oven set at a temperature of 200°C for 1,000 hours, and the breaking strengths of the test specimen before and after the heat treatment were measured. The strength retention ratio was calculated from the thus measured values, according to the following equation, and the heat resistance thereof was evaluated according to the following criteria. The measurement of the breaking strength is carried out by setting the sample piece having a width of 10 mm in a tensile tester, TENSILON, such that the length between chucks is adjusted to 100 mm, and then performing a tensile test at a tensile speed of 300 mm/min, in accordance with the method defined in JIS-C2151. Under the above described conditions, the measurement was carried out 10 times for each of the MD and TD directions, and the mean value thereof was obtained.

$$\text{Strength retention ratio } (\%) = Y/\ Y0 \times 100$$

Y0: breaking strength (MPa) before the heat treatment
Y: breaking strength (MPa) after the heat treatment

Long-term heat resistance

A: Strength retention ratio is 80% or more.
B: Strength retention ratio is 70% or more and less than 80%.
C: Strength retention ratio is less than 70%.

(6) Film-Forming Stability

The formation of a film to be described in each of the Examples and Comparative Examples was carried out continuously for 10 hours, and the number of occurrence of film rupture (including all of the ruptures which had occurred during the longitudinal stretching, the transverse stretching and the heat setting treatment) was counted, and evaluated according to the following criteria.

A: No rupture occurred (the film has a good film-forming stability).
B: Rupture occurred once or twice (the film has a slightly poor film-forming stability).
C: Rupture occurred three or more times (the film has a poor film-forming stability).

(7) Extrusion Stability

The materials for forming the layer A to be described in each of the Examples and Comparative Examples are prepared. Using an extrusion apparatus in which a resin pressure gauge and a 50 μm cut-off sintered filter were disposed, in this order, in the resin flow passage between a single-screw extruder (screw diameter: 25 mm, L/D = 28, single full flight screw) and a die, the extrusion and the filtration of the molten resin is carried out at a number of revolution of 100 rpm, a discharge speed of 2 kg/hr, and a cylinder temperature of 320°C for 5 hours. The resin pressure immediately after the start of the test, and the resin pressure upon the completion of the test were measured, and the amount of variation in resin pressure ΔP was then calculated from the thus measured values, according to the following equation. The thus obtained value was used as a reference for the production stability, and evaluated according to the following criteria.

$$\text{Amount of variation in resin pressure } (\Delta P) = \text{resin pressure [MPa] upon completion of the test - resin pressure [MPa] immediately after the start of the test}$$

A: ΔP is 0.5 MPa or less.
B: ΔP is greater than 0.5 MPa and 1.0 MPa or less.
C: ΔP is greater than 1.0 MPa.

(8) Rate of Change (Δμk) of Friction Coefficient

A sample obtained by slitting the film in the shape of a tape having a width of 1 cm was run on a tape running tester, TBT-300 (manufactured by Yokohama-System Co., Ltd.) in an atmosphere of 23°C and 50% RH, to measure the friction coefficient μk. The measurement was performed using a guide having a diameter of 6 mm and made of SUS27 (surface roughness: 0.2 S), at a winding angle of 90° and a running speed of 3.3 cm/sec, and repeated for 50 times. The friction coefficient μk at the first run and at the $50^{th}$ run were measured in the above measurement, and the rate of change Δμk of the friction coefficient was calculated from the thus measured values. The film running performance as a result of this repeated test was evaluated as follows. The friction coefficient μk is obtained by running the film on a tape running tester, and performing a calculation using the thus measured value, according to the following equation:

$$\mu k = 2/\pi \ln (T2/T1)$$

wherein T1 is the inlet side tension, and T2 is the outlet side tension. The rate of change Δμk of the friction coefficient μk is calculated from the measured values of the friction coefficient μk at the first film run and at the $50^{th}$ film run, according to the following equation:

$$\Delta\mu k = \mu k\ (50_{th}\ \text{run})\ /\mu k\ (\text{first run}).$$

A: The rate of change is less than 2.0.
B: The rate of change is 2.0 or more and less than 5.0.
C: The rate of change is 5.0 or more and less than 10.0.

(9) Workability

Using a motor slot processing machine (manufactured by Odawara Engineering Co., Ltd.), samples of the film to be evaluated were inserted into slots having a width of 24 mm and a length of 39 mm, one each in one slot, at a processing speed of two pieces/sec. One in which deformation or damage had been visually observed was evaluated

as a defective sample, and the percentage of occurrence of defective samples was evaluated according to the following criteria. One hundred samples were processed for each film.

A: The percentage of defective samples is less than 20%.
B: The percentage of defective samples is 20% or more and less than 25%.
C: The percentage of defective samples is 25% or more.

(10) Void content

An ion etching treatment was performed on a film fixed on a sample table of a scanning electron microscope, to cut a cross section of the film such that the cross section in the longitudinal direction of the film can be seen, using a sputtering apparatus under the conditions of a pressure reduction degree of $10^{-3}$ Torr, a voltage of 0.25 KV and a current of 12.5 mA for 10 minutes. Subsequently, gold was sputtered onto the surface, using the same apparatus, followed by observation using the scanning electron microscope, at a magnification of 5,000-fold. The thus obtained observation image was analyzed using an image processing apparatus, to calculate the area A ($\mu m^2$) of the cavity portions in a layer X of interest, and the total area B ($\mu m^2$) of the layer X, in the observation image. Then the void content C (%) of the layer X was obtained from the thus calculated values, according to the following equation. The above described operation was repeated, to capture 10 pieces of observation images and to carry out the calculation of the respective void contents, and the average of the calculated values obtained from the 10 images was taken as the void content (%) of the layer X.

$$\text{Void content C (\%) of layer X} = \text{area A } (\mu m^2) \text{ of cavity portions in layer X/ total area B } (\mu m^2) \text{ of layer X} \times 100$$

(11) Thermal Conductivity

a. Specific Heat Capacity Cp

The specific heat capacity (J/ (kg-K.)) at 25°C was measured by a differential scanning calorimeter (DSC-7; manufactured by PerkinElmer Inc.) in accordance with JIS K 7123-1987, using sapphire as a standard material. The measurement was carried out with n = 5, and the mean value of the measured values was taken as the specific heat capacity Cp (J/ (kg·K)) of the sample.

b. Thermal Diffusivity $\alpha$

The thermal diffusivity ($m^2$/S) was measured using ai-Phase Mobile 1u (thermal conductivity measuring system; manufactured by ai-Phase Co., Ltd.). The measurement was carried out with n = 5, and the mean value of the measured values was taken as the thermal diffusivity $\alpha$ ($m^2$/S) of the sample.

c. Density $\rho$

The film to be evaluated was cut into a size of 50 mm $\times$ 40 mm, and the measurement of the density thereof was carried out by the Archimedes method, in an atmosphere of room temperature 23°C and relative humidity of 65%, using a specific gravity measurement kit (AD-1653-BM; manufactured by A&D Company, Limited). The measurement was carried out with n = 3, and the mean value of the measured values was taken as the density $\rho$ (kg/$m^3$) of the sample.

d. Thermal Conductivity $\lambda$

The thermal conductivity $\lambda$ (J/(s·m·k) was calculated from the measured values obtained in the above described sections a to c, according to the following equation:

$$\text{thermal conductivity } \lambda \text{ (J/ (s·m·k)} = \text{specific heat capacity Cp (J/(kg·K))} \times \text{thermal diffusivity } \alpha \text{ } (m^2/S) \times \text{density } \rho \text{ } (kg/m^3).$$

(12) Presence or Absence of Through Pores

In cases where the film to be evaluated has a laminated structure in which the layer (III) is exposed to the surface, the film is used as it is. In cases where the film has a laminated structure in which the layer (III) is not exposed to the surface, 11 cuts in the longitudinal direction and 11 cuts in the transverse direction are made at intervals of 1 mm (a lattice composed of 10 × 10 = 100 squares is formed by this operation) on a test specimen for evaluation, using an interval spacer for cross cuts (model number: CROSS CUT GUIDE 1.0; manufactured by COTEC Corporation) and a cutter knife. On the thus formed lattice, a transparent pressure-sensitive adhesive tape (model number: 31B; manufactured by Nitto Denko Corporation) was allowed to adhere under pressure, and the adhered tape was peeled off in the direction of about 60 degrees to remove the other layer (II).

On the surface of the sample in which the layer (III) is exposed, acetone is dropped using a syringe, and then the resultant is left to stand for one minute. Next, acetone attached to the sample surface is wiped off with a rag for wiping, and the sample is placed on a light box (Fujicolor LED Viewer Pro; manufactured by Fujifilm Corporation) to confirm the presence or absence of black spots, which indicate the presence of acetone contained in the interior of the layer, when light is allowed to pass therethrough. The results were evaluated according to the following criteria.

A: Acetone is permeated into the film layer, and black spots can be observed (the layer includes through pores).
B: Acetone is not permeated into the film layer, and black spots cannot be observed (the layer does not include through pores).

(13) Method of Detecting Nitrogen Atom and Sulfur Atom in Film

The film to be evaluated was precisely weighed in an amount of about 1 mg, and an elemental analysis was carried out using a micro nitrogen-sulfur analyzer (model: "ANTEK 7000" manufactured by ASTEC Co., Ltd.), to confirm the presence or absence of nitrogen atoms and sulfur atoms.

EXAMPLES

(Reference Example 1) Method of Producing Polyphenylene Sulfide Resin

(Granules)

A quantity of 100 mol of sodium sulfide 9-hydrate, 45 mol of sodium acetate, and 25 litres of N-methyl-2-pyrrolidone (hereinafter, abbreviated as NMP) were charged into an autoclave (maximum pressure used: 14 MPa). The resulting mixture was gradually heated to a temperature of 220°C, while stirring, to remove moisture contained in the mixture by distillation. To the reaction system whose moisture had been removed, 100 mol of p-dichlorobenzene as a main component monomer was added, along with 5 litres of NMP, and nitrogen was introduced in a sealed state under pressure, at a temperature of 170°C and at a rate of 3 kg/cm$^2$. Subsequently, the temperature of the resultant was elevated, followed by polymerization at 270°C for 4 hours. After the completion of the polymerization, the resultant was cooled, and a polymer was allowed to precipitate in distilled water. Then small aggregates of the polymer were collected using a wire mesh having a mesh aperture of 150 mesh. The thus obtained polymer in the form of small aggregates were washed twice with distilled water at 90°C, followed by washing three times with an aqueous solution of sodium acetate, and then once with distilled water. Thereafter, the resultant was dried at a temperature of 120°C under reduced pressure, to obtain granules of a polyphenylene sulfide (PPS) resin having a melting point of 280°C.

(Reference Example 2) Method of producing Film-Forming Raw Material (PPS0)

The granules of the PPS resin produced in Reference Example 1 were fed to a co-rotating twin screw kneading extruder equipped with a bent (manufactured by The Japan Steel Works, Ltd., screw diameter: 30 mm, screw length/screw diameter = 45.5) which had been heated to a temperature of 320°C, and then melt extruded in the form of strands at a residence time of 90 seconds and at a number of screw revolution of 150 rotations/ minutes, followed by cooling with water at a temperature of 25°C. The thus cooled strands were immediately cut to be formed into chips, to be used as a film-forming raw material (PPS0).

(Reference Example 3) Method of producing Film-Forming Raw Material (PPS1)

Calcium carbonate ($CaCO_3$, P-50; manufactured by Shiraishi Calcium Kaisha, Ltd.) was sieved with a sieve shaker (AS200; manufactured by Verder Scientific Co., Ltd.), and adjusted so as to achieve: a volume average particle

diameter of 15 μm; a content of particles having a particle diameter of 1 μm or less of 10% by mass; and a content of particles having a particle diameter of 50 μm or more of 0% by mass. Next, 99.5% by mass of the granules of the PPS resin produced in Reference Example 1 and 0.5% by mass of the above described calcium carbonate were fed to a co-rotating twin screw kneading extruder equipped with a bent (manufactured by The Japan Steel Works, Ltd., screw diameter: 30 mm, screw length/ screw diameter = 45.5) which had been heated to a temperature of 320°C, and then melt extruded in the form of strands at a residence time of 90 seconds and at a number of screw revolution of 150 rotations/ minutes, followed by cooling with water at a temperature of 25°C. The thus cooled strands were immediately cut to be formed into chips, to be used as a film-forming raw material (PPS1).

(Reference Example 4) Method of producing Film-Forming Raw Material (PPS2)

The same procedure as in Reference Example 3 was repeated, except for using 60% by mass of the granules of the PPS resin and 40% by mass of the calcium carbonate, to obtain a film-forming raw material (PPS2).

(Reference Example 5) Method of producing Film-Forming Raw Material (PPS3)

The same procedure as in Reference Example 3 was repeated, except for using 75% by mass of the granules of the PPS resin and 25% by mass of the calcium carbonate, to obtain a film-forming raw material (PPS3).

(Reference Example 6) Method of producing Film-Forming Raw Material (PPS4)

The same procedure as in Reference Example 3 was repeated, except for using 97% by mass of the granules of the PPS resin and 3% by mass of the calcium carbonate, to obtain a film-forming raw material (PPS4).

(Reference Example 7) Method of producing Film-Forming Raw Material (PPS5)

The same procedure as in Reference Example 5 was repeated, except for using calcium carbonate ($CaCO_3$, P-50; manufactured by Shiraishi Calcium Kaisha, Ltd.) which had been sieved with a sieve shaker (AS200; manufactured by Verder Scientific Co., Ltd.) and adjusted so as to achieve: a volume average particle diameter of 15 μm; a content of particles having a particle diameter of 1 μm or less of 18% by volume; and a content of particles having a particle diameter of 50 μm or more of 0% by volume; to obtain a film-forming raw material (PPS5).

(Reference Example 8) Method of producing Film-Forming Raw Material (PPS6)

The same procedure as in Reference Example 5 was repeated, except for using calcium carbonate ($CaCO_3$, P-50; manufactured by Shiraishi Calcium Kaisha, Ltd.) which had been sieved with a sieve shaker (AS200; manufactured by Verder Scientific Co., Ltd.) and adjusted so as to achieve: a volume average particle diameter of 8 μm; a content of particles having a particle diameter of 1 μm or less of 30% by volume; and a content of particles having a particle diameter of 50 μm or more of 0% by volume; to obtain a film-forming raw material (PPS6).

(Reference Example 11) Method of producing Film-Forming Raw Material (PPS7)

The same procedure as in Reference Example 5 was repeated, except for using calcium carbonate ($CaCO_3$, P-10; manufactured by Shiraishi Calcium Kaisha, Ltd.) which had been sieved with a sieve shaker (AS200; manufactured by Verder Scientific Co., Ltd.) and adjusted so as to achieve: a volume average particle diameter of 2 μm; a content of particles having a particle diameter of 1 μm or less of 24% by volume; and a content of particles having a particle diameter of 50 μm or more of 0% by volume; to obtain a film-forming raw material (PPS7).

(Reference Example 12) Method of producing Film-Forming Raw Material (PPS8)

Calcium carbonate ($CaCO_3$, P-40; manufactured by Shiraishi Calcium Kaisha, Ltd.) was sieved with a sieve shaker (AS200; manufactured by Verder Scientific Co., Ltd.), and adjusted so as to achieve: a volume average particle diameter of 10 μm; a content of particles having a particle diameter of 1 μm or less of 10% by volume; and a content of particles having a particle diameter of 50 μm or more of 0% by volume. Then, the same procedure as in Reference Example 3 was repeated, except for using 80% by mass of the granules of the PPS resin and 20% by mass of the thus obtained calcium carbonate, to obtain a film-forming raw material (PPS8).

(Reference Example 13) Method of producing Film-Forming Raw Material (PPS9)

The same procedure as in Reference Example 12 was repeated, except for using 70% by mass of the granules of the PPS resin and 30% by mass of the calcium carbonate, to obtain a film-forming raw material (PPS9).

(Reference Example 14) Method of producing Film-Forming Raw Material (PPS10)

The same procedure as in Reference Example 12 was repeated, except for using 50% by mass of the granules of the PPS resin and 50% by mass of the calcium carbonate, to obtain a film-forming raw material (PPS10).

(Reference Example 15) Method of producing Film-Forming Raw Material (PPS11)

The same procedure as in Reference Example 12 was repeated, except for using 40% by mass of the granules of the PPS resin and 60% by mass of the calcium carbonate, to obtain a film-forming raw material (PPS11).

(Reference Example 16) Method of producing Film-Forming Raw Material (PPS12)

The same procedure as in Reference Example 14 was repeated, except for using calcium carbonate ($CaCO_3$, P-40; manufactured by Shiraishi Calcium Kaisha, Ltd.) which had been sieved with a sieve shaker (AS200; manufactured by Verder Scientific Co., Ltd.) and adjusted so as to achieve: a volume average particle diameter of 10 μm; a content of particles having a particle diameter of 1 μm or less of 18% by volume; and a content of particles having a particle diameter of 50 μm or more of 0% by volume; to obtain a film-forming raw material (PPS12).

(Reference Example 17) Method of producing Film-Forming Raw Material (PPS13)

The same procedure as in Reference Example 13 was repeated, except for using the calcium carbonate used in Reference Example 11, to obtain a film-forming raw material (PPS13).

(Reference Example 18) Method of producing Film-Forming Raw Material (PPS14)

The same procedure as in Reference Example 13 was repeated, except for using titanium oxide ($TiO_2$, R-38L; manufactured by Ishihara Sangyo Kaisha Ltd.) which had been sieved with a sieve shaker (AS200; manufactured by Verder Scientific Co., Ltd.) and adjusted so as to achieve: a volume average particle diameter of 0.4 μm; a content of particles having a particle diameter of 1 μm or less of 90% by volume; and a content of particles having a particle diameter of 50 μm or more of 0% by volume; to obtain a film-forming raw material (PPS14).

(Reference Example 19) Method of producing Film-Forming Raw Material (PPS15)

The same procedure as in Reference Example 13 was repeated, except for using calcium carbonate ($CaCO_3$, P-70; manufactured by Shiraishi Calcium Kaisha, Ltd.) which had been sieved with a sieve shaker (AS200; manufactured by Verder Scientific Co., Ltd.) and adjusted so as to achieve: a volume average particle diameter of 26 μm: a content of particles having a particle diameter of 1 μm or less of 5% by volume: and a content of particles having a particle diameter of 50 μm or more of 1% by volume: to obtain a film-forming raw material (PPS15).

(Reference Example 20) Method of producing Film-Forming Raw Material (PPS16)

The same procedure as in Reference Example 12 was repeated, except for using 25% by mass of the granules of the PPS resin and 75% by mass of the calcium carbonate, to obtain a film-forming raw material (PPS16).

(Examples 1 to 7)

The chips produced in Reference Examples 2 to 7 and 11 were each vacuum dried at 180°C for 3 hours, and then two types of these chips in the combinations shown in Table 1 were separately fed to two extruders. The two types of chips, each in a molten state, were led to a laminating apparatus disposed at the upper portion of the mouthpiece, such that they can be laminated in three layers (in a layer configuration of (I)/ (II)/(I), at a lamination ratio of (I): (II): (I) = 1:8:1). Subsequently, the resultant was discharged from the T-die mouthpiece, and allowed to adhere onto a cast drum controlled to a surface temperature of 25°C in close contact, so as to be quickly cooled and solidified, while applying a static charge thereto, to obtain an unstretched laminated sheet having a thickness of 950 μm, for each of the Examples.

Then the resulting unstretched laminated sheet was preheated with a plurality of heating rolls heated to a surface temperature of 90°C, followed by stretching 3.5 times in the longitudinal direction (MD direction), between heating rolls heated to a surface temperature of 100°C, and chill rolls provided after the heating rolls and having a surface temperature of 30°C and a circumferential velocity different from that of the heating rolls. The thus obtained uniaxially stretched sheet was stretched 3.5 times in the longitudinal direction and in the vertical direction (TD direction) at a temperature of 95°C, using a tenter. Subsequently, the resulting sheet was subjected to a heat treatment at 270°C, and then relaxed 5% in the TD direction in a relaxation treatment zone controlled at 270°C, followed by cooling to room temperature, to, obtain a laminated film having a thickness of 100 μm, for each of the Examples.

(Examples 8 to 14 and Comparative Example 6)

The chips produced in Reference Example 2 and Reference Examples 12 to 19 were each vacuum dried at 180°C for 3 hours, and then two types of these chips in the combinations shown in Table 1 were separately fed to two extruders. The two types of chips, each in a molten state, were led to a laminating apparatus disposed at the upper portion of the mouthpiece, such that they can be laminated in three layers (in a layer configuration of (II)/(III)/(II), at a lamination ratio of (II): (III): (II) = 1:2:1). Subsequently, the resultant was discharged from the T-die mouthpiece, and allowed to adhere onto a cast drum controlled to a surface temperature of 25°C in close contact, so as to be quickly cooled and solidified, while applying a static charge thereto, to obtain an unstretched laminated sheet having a thickness of 1,400 μm, for each of the Examples and Comparative Example. Then the resulting unstretched laminated sheet was preheated with a plurality of heating rolls heated to a surface temperature of 90°C, followed by stretching 3.5 times in the longitudinal direction (MD direction), between heating rolls heated to a surface temperature of 100°C, and chill rolls provided after the heating rolls and having a surface temperature of 30°C and a circumferential velocity different from that of the heating rolls. The thus obtained uniaxially stretched sheet was stretched 3.3 times in the longitudinal direction and in the vertical direction (TD direction) at a temperature of 95°C, using a tenter. Subsequently, the resulting sheet was subjected to a heat treatment at 270°C, and then relaxed 5% in the TD direction in a relaxation treatment zone controlled at 270°C, followed by cooling to room temperature, to obtain a laminated film having a thickness of 150 μm, for each of the Examples and Comparative Example.

(Examples 15 to 18)

The chips produced in Reference Example 2 and Reference Examples 13 to 16 were each vacuum dried at 180°C for 3 hours, and then two types of these chips in the combinations shown in Table 1 were separately fed to two extruders. The two types of chips, each in a molten state, were led to a laminating apparatus disposed at the upper portion of the mouthpiece, such that they can be laminated in two layers (in a layer configuration of (III)/(II), at a lamination ratio of (III): (II) = 4:1). Subsequently, the resultant was discharged from the T-die mouthpiece to be melt-extruded, and allowed to adhere onto a cast drum controlled to a surface temperature of 25°C in close contact, so as to be quickly cooled and solidified, while applying a static charge thereto, to obtain an unstretched laminated sheet having a thickness of 950 μm, for each of the Examples. Then the resulting unstretched laminated sheet was preheated with a plurality of heating rolls heated to a surface temperature of 90°C, followed by stretching 3.5 times in the longitudinal direction (MD direction), between heating rolls heated to a surface temperature of 100°C, and chill rolls provided after the heating rolls and having a surface temperature of 30°C and a circumferential velocity different from that of the heating rolls. The thus obtained uniaxially stretched sheet was stretched 3.3 times in the longitudinal direction and in the vertical direction (TD direction) at a temperature of 95°C, using a tenter. Subsequently, the resulting sheet was subjected to a heat treatment at 270°C, and then relaxed 5% in the TD direction in a relaxation treatment zone controlled at 270°C, followed by cooling to room temperature, to obtain a laminated film having a thickness of 100 μm, for each of the Examples.

(Comparative Example 1)

The chips produced in Reference Example 2 were vacuum dried at 180°C for 3 hours, and then the resultant was fed to an extruder. Subsequently, the resultant was discharged from the T-die mouthpiece, and allowed to adhere onto a cast drum controlled to a surface temperature of 25°C in close contact, so as to be quickly cooled and solidified, while applying a static charge thereto, to obtain an unstretched laminated sheet having a thickness of 950 μm. Then, stretching and heat treatment were carried out in the same manner as in Example 1, to obtain a film having a thickness of 100 μm.

(Comparative Example 2)

The chips produced in Reference Example 2 were vacuum dried at 180°C for 3 hours, and then the resultant

was fed to an extruder. Subsequently, the resultant was discharged from the T-die mouthpiece, and allowed to adhere onto a cast drum controlled to a surface temperature of 25°C in close contact, so as to be quickly cooled and solidified, while applying a static charge thereto, to obtain an unstretched laminated sheet having a thickness of 650 μm. Then, stretching and heat treatment were carried out in the same manner as in Example 1, to obtain a film having a thickness of 60 μm.

A quantity of 62.4 g of N-methylpyrrolidone was mixed with 7.5 g of the calcium carbonate used in Reference Example 1, as inorganic particles, followed by dispersing the inorganic particles. To the resultant, 30 g of polyethersulfone (PES: ULTRASON E2010; manufactured by BASF JAPAN LTD.) was added, followed by stirring, to obtain a prepared liquid (PES). The thus prepared liquid was applied on both surfaces of the above obtained film, using a bar coater, to a coating thickness after drying of 20 μm, on one surface. The resultant was dried at 230°C for one hour, to obtain a laminated film.

(Comparative Example 3)

The chips produced in Reference Examples 3 and 5 were each vacuum dried at 180°C for 3 hours, and they were separately fed to two extruders so as to be formed into a layer configuration shown in Table 1. The two types of chips, each in a molten state, were led to a laminating apparatus disposed at the upper portion of the mouthpiece, such that they can be laminated in three layers (in a layer configuration of (I)/ (II)/(I), at a lamination ratio of (I): (II): (I) = 1:8:1). Subsequently, the resultant was discharged from the T-die mouthpiece, while adjusting the discharge amount and the casting speed, and allowed to adhere onto a cast drum controlled to a surface temperature of 25°C in close contact, so as to be quickly cooled and solidified, while applying a static charge thereto, to obtain an unstretched laminated film having a thickness of 100 μm.

(Comparative Example 4)

The same procedure as in Example 16 was repeated, except that the chips produced in Reference Example 2 were vacuum dried at 180°C for 3 hours, and then fed to each of two extruders, to obtain a biaxially stretched film having a thickness of 100 μm.

(Comparative Example 5)

The same procedure as in Example 8 was repeated, except that the chips produced in Reference Example 2 were vacuum dried at 180°C for 3 hours, and then fed to each of two extruders, to obtain a biaxially stretched film having a thickness of 150 μm.

(Reference Examples 9 and 10)

The same procedure as in Example 1 was repeated, except for using the chips produced in Reference Examples 5 and 8, to obtain unstretched laminated sheets of Reference Examples 9 and 10, respectively, each having a thickness of 950 μm. Then each of the resulting unstretched laminated sheets was preheated with a plurality of heating rolls heated to a surface temperature of 90°C, followed by stretching 3.5 times in the longitudinal direction (MD direction), between heating rolls heated to a surface temperature of 100°C, and chill rolls provided after the heating rolls and having a surface temperature of 30°C and a circumferential velocity different from that of the heating rolls. The thus obtained uniaxially stretched sheet was attempted to be stretched 3.5 times in the longitudinal direction and in the vertical direction (TD direction) at a temperature of 95°C, using a tenter. However, the film had ruptured during the stretching, and it was unable to produce a laminated film, in each of the Reference Examples.

(Reference Example 21)

The same procedure as in Example 8 was repeated except for using the chips produced in Reference Example 2 and Reference Example 20, to obtain an unstretched laminated sheet having a thickness of 1,400 μm. Then biaxial stretching of the thus obtained sheet was attempted in the same manner as in Example 8. However, the film had rupture during the stretching, and it was unable to produce a laminated film.

[Table 1]

| | | | Examples | | | | | | | Comparative Examples | | | Reference Examples | |
|---|---|---|---|---|---|---|---|---|---|---|---|---|---|---|
| | | | 1 | 2 | 3 | 4 | 5 | 6 | 7 | 1 | 2 | 3 | 9 | 10 |
| Composition | I | | PPS2 | PPS3 | PPS4 | PPS3 | PPS5 | PPS4 | PPS1 | PPS0 | PES | PPS3 | PPS3 | PPS6 |
| | II | | PPS1 | PPS1 | PPS1 | PPS0 | PPS1 | PPS3 | PPS7 | - | PPS0 | PPS1 | PPS3 | PPS6 |
| | Type of particles used | | CaCO3 | CaCO3 | CaCO3 | CaCO3 | CaCO3 | CaCO3 | CaCO3 | - | CaCO3 | CaCO3 | CaCO3 | CaCO3 |
| | Content of particles having a particle diameter of 1 μm or less: % by volume | | 10 | 10 | 10 | 10 | 18 | 10 | 24 | - | 10 | 10 | 10 | 30 |
| | Particle concentration in layer (I) | % by mass | 40 | 25 | 3 | 25 | 25 | 3 | 25 | 0 | 25 | 25 | 25 | 25 |
| | Particle concentration in layer (II) | % by mass | 0.5 | 05 | 0.5 | 0 | 0.5 | 25 | 0.5 | - | 0 | 0.5 | 25 | 25 |
| Film thickness | total | μm | 100 | 100 | 100 | 100 | 100 | 100 | 100 | 100 | 100 | 100 | Unable | Unable tc |
| | (I) | | 20 | 20 | 20 | 20 | 20 | 20 | 20 | 100 | 40 | 20 | stretch | stretch |
| | (II) | | 80 | 80 | 80 | 80 | 80 | 80 | 80 | - | 60 | 80 | | |
| Layer Configuration | | | I/ II/ I | I/ II/ I | I/ II/ I | I/ II/ I | I/ II/ I | I/ II/ I | I/ II/ I | I | I/ II/ I | I/ II/ I | I/ II/ I | I/ II/ I |
| Presence or absence of voids | | | A | A | A | A | A | A | A | B | B | B | - | - |
| Void ratios of respective layers | | | I> II | I> II | I> II | I>II | I>II | I< II | I>II | - | - | - | - | - |
| Average diameter of voids in layer (II) μm | | | 20 | 20 | 20 | 20 | 18 | 20 | 7 | - | - | 20 | - | - |

(continued)

| | | | Examples | | | | | | | Comparative Examples | | | Reference Examples | |
|---|---|---|---|---|---|---|---|---|---|---|---|---|---|---|
| | | | 1 | 2 | 3 | 4 | 5 | 6 | 7 | 1 | 2 | 3 | 9 | 10 |
| Effects | Electrical Insulation | kV | 16 | 16 | 16 | 18 | 14 | 15 | 16 | 19 | 12 | 14 | - | - |
| | | Dielectric breakdown voltaqe kV/mm | 160 | 160 | 160 | 180 | 140 | 150 | 160 | 190 | 120 | 140 | - | - |
| | Heat resistance | | A | A | A | A | A | A | A | A | B | C | - | - |
| | Film-forming stability | | B | A | A | A | A | B | B | A | A | A | C | C |
| | Extrusion stability | | A | A | A | A | B | A | B | A | A | A | A | C |
| | Rate of change of friction coefficient | | B | A | A | A | A | A | A | C | A | A | - | - |
| | Workability | | A | A | B | A | A | B | A | C | B | B | - | - |

[Table 2]

| | | | Examples | | | | | | | | | | | Comparative Examples | | | Reference Examples |
|---|---|---|---|---|---|---|---|---|---|---|---|---|---|---|---|---|---|
| | | | 8 | 9 | 10 | 11 | 12 | 13 | 14 | 15 | 16 | 17 | 18 | 4 | 5 | 6 | 21 |
| Composition | III | | PPS8 | PPS9 | PPS10 | PPS11 | PPS12 | PPS13 | PPS15 | PPS9 | PPS1 | PPS11 | PPS12 | PPS0 | PPS0 | PPS14 | PPS16 |
| | II | | PPS0 | PPS0 | PPS0 | PPS0 | PPS0 | PPS0 | PPS0 | PPS0 | PPS0 | PPS0 | PPS0 | PPS0 | PPS0 | PPS0 | PPS0 |
| | Content of particles having a particle diameter of 1 μm or less: %by volume | | 10 | 10 | 10 | 10 | 18 | 24 | 5 | 10 | 10 | 10 | 18 | - | - | 90 | 10 |
| | Particle concentration in layer (III) | % by mass | 20 | 30 | 50 | 60 | 50 | 30 | 30 | 30 | 50 | 60 | 50 | 0 | 0 | 30 | 75 |
| | Particle concentration in layer (II) | % by mass | 0 | 0 | 0 | 0 | 0 | 0 | 0 | 0 | 0 | 0 | 0 | 0 | 0 | 0 | 0 |
| Film thick-ness | total | μm | 150 | 150 | 150 | 150 | 150 | 150 | 150 | 100 | 100 | 100 | 100 | 100 | 150 | 100 | Unable to stretch |
| | (III) | | 100 | 100 | 100 | 100 | 100 | 100 | 100 | 80 | 80 | 80 | 80 | 80 | 100 | 80 | |
| | (II) | | 50 | 50 | 50 | 50 | 50 | 50 | 50 | 20 | 20 | 20 | 20 | 20 | 50 | 20 | |
| Layer Configuration | | | II/ III/ II | II/ III/ II | II/ III/ II | II/ III/ II | II/ III/ II | II/ III/ II | II/ III/ II | III/ II | III/ II | III/ II | III/ II | III/ II | II/ III/ II | II/ III/ II | II/ III/ II |
| Void content in layer (III) | | % | 25 | 45 | 65 | 70 | 65 | 35 | 55 | 45 | 65 | 70 | 60 | 0 | 0 | 15 | - |
| Average diameter of voids in layer (III)) | | μm | 15 | 15 | 15 | 15 | 13 | 7 | 35 | 15 | 15 | 15 | 13 | - | - | 1 | - |
| Electrical insulaton | | Dielectric breakdown voltage kV/mm | 160 | 153 | 133 | 127 | 133 | 160 | 145 | 110 | 105 | 100 | 105 | 190 | 190 | 170 | - |
| Thermal conductivity | | J/(s·m·K) | 0.29 | 0.23 | 0.18 | 0.15 | 0.19 | 0.26 | 0.20 | 0.28 | 0.24 | 0.23 | 0.24 | 0.32 | 0.35 | 0.30 | - |
| Heat resistance | | | A | A | A | A | A | A | A | A | A | A | A | A | A | A | - |
| Film-forming stability | | | A | A | A | B | A | B | B | A | A | B | A | A | A | C | C |
| Extrusion stability | | | A | A | A | A | B | B | B | A | A | A | B | A | A | C | B |
| Presence or absence of through pores | | | B | B | A | A | A | B | A | B | A | A | A | B | B | B | - |

## Claims

1. A laminated film composed of a thermoplastic resin comprising, as an element constituting a molecule, at least one of a nitrogen atom or a sulfur atom, wherein at least one of the layers constituting the laminated film is a layer (III) containing inorganic particles and voids, and the voids have an average diameter of 5 μm or more, wherein the inorganic particles contain particles having a particle diameter of 1 μm or less in an amount of less than 25% by volume.

2. The laminated film according to claim 1, wherein the layer (III) is a layer containing through pores.

3. The laminated film according to claim 1, wherein the particles contained in the layer (III) have a volume average particle diameter of from 3 to 20 μm.

4. The laminated film according to claim 1, wherein the laminated film has a thermal conductivity of 0.25 J/(s·m·K) or less.

5. The laminated film according to claim 1, wherein the laminated film has a laminated structure of at least three layers, and wherein another layer (II) having a composition and/or a composition ratio different from that/those of the layer (III) is laminated as each of both surface layers.

6. The laminated film according to any one of claims 1 to 5, wherein the laminated film has a strength retention ratio of 70% or more, as measured after being treated at 200°C for 1,000 hours.

7. The laminated film according to any one of claims 1 to 6, wherein the thermoplastic resin is at least one selected from the group consisting of polysulfone resins, polyarylene sulfide resins, polyamide resins, polyethersulfone resins, and polyetherimide resins.

8. The laminated film according to any one of claims 1 to 7, wherein the thermoplastic resin is a polyarylene sulfide resin.

## Patentansprüche

1. Laminierte Folie, die aus einem thermoplastischen Harz besteht, das als ein Molekül bildendes Element zumindest eines von einem Stickstoffatom und einem Schwefelatom umfasst, wobei zumindest eine der Schichten, die die laminierte Folie bilden, eine Schicht (III) ist, die anorganische Teilchen und Leerräume enthält, und die Leerräume einen mittleren Durchmesser von 5 μm oder mehr aufweisen, wobei die anorganischen Teilchen Teilchen, die einen Teilchendurchmesser von 1 μm oder weniger aufweisen, in einer Menge von weniger als 25 Vol.-% enthalten.

2. Laminierte Folie nach Anspruch 1, wobei die Schicht (III) eine Schicht ist, die Durchgangsporen enthält.

3. Laminierte Folie nach Anspruch 1, wobei die Teilchen, die in der Schicht (III) enthalten sind, einen volumenmittleren Teilchendurchmesser von 3 bis 20 μm aufweisen.

4. Laminierte Folie nach Anspruch 1, wobei die laminierte Folie eine Wärmeleitfähigkeit von 0,25 J/(s·m·K) oder weniger aufweist.

5. Laminierte Folie nach Anspruch 1, wobei die laminierte Folie eine laminierte Struktur aus zumindest drei Schichten aufweist und wobei eine weitere Schicht (II), die eine Zusammensetzung und/oder ein Zusammensetzungsverhältnis aufweist, die/das sich von jener/jenem der Schicht (III) unterscheidet, jeweils als beide Oberflächenschichten auflaminiert ist.

6. Laminierte Folie nach einem der Ansprüche 1 bis 5, wobei die laminierte Folie ein Festigkeitserhaltungsanteil von 70 % oder mehr aufweist, gemessen nach einer 1.000-stündigen Behandlung bei 200 °C.

7. Laminierte Folie nach einem der Ansprüche 1 bis 6, wobei das thermoplastische Harz zumindest ein aus der aus Polysulfonharzen, Polyarylensulfidharzen, Polyamidharzen, Polyethersulfonharzen und Polyetherimidharzen bestehenden Gruppe ausgewähltes ist.

8. Laminierte Folie nach einem der Ansprüche 1 bis 7, wobei das thermoplastische Harz ein Polyarylensulfidharz ist.

## Revendications

1. Film stratifié composé d'une résine thermoplastique comprenant, comme élément constituant une molécule, au moins un parmi un atome d'azote ou un atome de soufre, dans lequel au moins une des couches constituant le film stratifié est une couche (III) contenant des particules inorganiques et des vides, et les vides ont un diamètre moyen supérieur ou égal à 5 μm, dans lequel les particules inorganiques contiennent des particules ayant un diamètre de particule inférieur ou égal à 1 μm en une quantité inférieure à 25 % en volume.

2. Film stratifié selon la revendication 1, dans lequel la couche (III) est une couche contenant des pores traversants.

3. Film stratifié selon la revendication 1, dans lequel les particules contenues dans la couche (III) ont un diamètre de particule moyen en volume de 3 à 20 μm.

4. Film stratifié selon la revendication 1, dans lequel le film stratifié a une conductivité thermique inférieure ou égale à 0,25 J/(s•m•K).

5. Film stratifié selon la revendication 1, dans lequel le film stratifié a une structure stratifiée d'au moins trois couches, et dans lequel une autre couche (II) ayant une composition et/ou un rapport de composition différent(e) de celle ou celui/ceux de la couche (III) est stratifiée comme chacune de deux couches de surface.

6. Film stratifié selon l'une quelconque des revendications 1 à 5, dans lequel le film stratifié a un taux de conservation de résistance supérieur ou égal à 70 %, tel que mesuré après avoir été traité à 200°C pendant 1 000 heures.

7. Film stratifié selon l'une quelconque des revendications 1 à 6, dans lequel la résine thermoplastique est au moins une choisie dans le groupe constitué de résines polysulfones, de résines de sulfure de polyarylène, de résines de polyamide, de résines de polyéthersulfone et de résines de polyétherimide.

8. Film stratifié selon l'une quelconque des revendications 1 à 7, dans lequel la résine thermoplastique est une résine de sulfure de polyarylène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012081741 A
- JP 2006262687 A
- JP 2012182910 A
- JP 2012232570 A
- JP 2013149565 A
- JP 2010106408 A
- JP 10259561 A
- JP 2012251022 A
- JP 2011162771 A
- JP 2015013913 A
- JP 58067733 A